# EUROPEAN PATENT SPECIFICATION

(11) **EP 2 178 362 B1**
(45) Date of publication and mention of the grant of the patent: **09.11.2016**
(21) Application number: 08779101.8
(22) Date of filing: 03.07.2008
(51) Int. Cl.: A01K 61/00

(54) **MEANS AND METHOD FOR AVERAGE WEIGHT DETERMINATION AND APPETITE FEEDING**
MITTEL UND VERFAHREN ZUR DURCHSCHNITTSGEWICHTSBESTIMMUNG UND APPETITFÜTTERUNG
MOYENS ET PROCÉDÉ DE DÉTERMINATION DU POIDS MOYEN ET D'ALIMENTATION EN FONCTION DE L'APPÉTIT

(30) Priority: 09.07.2007 NO 20073563
(43) Date of publication of application: 28.04.2010
(73) Proprietor: Ecomerden A/S, 6924 Hardbakke (NO)
(72) Inventor: KYRKJEBO, Jan Erik, 5238 Raadal (NO)
(74) Representative: Øvsttun, Trond
(86) International application number: PCT/NO2008/000254
(87) International publication number: WO 2009/008733

(56) References cited:
- EP-A1- 1 510 125
- EP-A1- 1 510 125
- WO-A1-2005/025309
- JP-A- 2000 201 568
- SE-A- 9 804 384
- US-A- 5 732 655
- US-A1- 2004 023 612
- "Automatic feeding of animals, especially fish, uses data from camera for recording food falling beneath water surface to regulate feeding device", DERWENT, 18 June 2000 (2000-06-18), XP002309588,

## Description

The present invention relates to a method and a system as described in the preamble of the respective independent claims, and is especially concerned with registration of predominately freely moving objects in a netpen of a fish farm, in which a camera is being submerged and suspended from a cable in the netpen, and said camera is connected to a computer processing unit.

The fish farming industry still has a number of imperfect and labour intensive technical challenges with regard to a more efficient operation.

A need for good growth, low feeding factor, environment and more frequent reporting of average weights and biomass are also demands which in recent times have become more and more topical. These together constitute the important elements for increased profitability.

Here the use of an underwater camera has, in different ways, been a recognised tool used for average weight determination and control of feeding.

However no completely automated solution has been developed and introduced to the market to measure the average weight of fish and, at the same time function, as a tool for feeding of the fish as a simple and maintenance friendly combined solution.

From brochures from Akva Group ASA, Storvik A/S, Poro and Vaka As, a technique is known with regard to average biomass weight measuring in netpens and video analysis which counts feed pellets. Vicass, shown on a web page for Aquagroup ASA, is an average weight determiner which consists of two cameras in a frame. This has a great flaw in that it can only take two-dimensional images of fish, i.e. breadth and length and, in addition, it functions only when the fish swims perpendicularly to the direction of the camera, in addition it must be carried out manually and painstakingly to get reliable and sufficient images of the fish. This is therefore heavy going and time-consuming to use in a large netpen in a fish farm.

The average weight determiner from Vaki and Storvik advertised in the magazine Norsk Fiskeoppdrett consists of a frame which the fish must swim through. The problem is that the largest fish refuse to swim through the measuring frame with the result being that the average weight which is measured is too small, i.e. the population has too many small fish in relation to large fish. The measurements can thereby be in doubt. These frames are also manual and often require calibrations which make them not very effective as a stationary device.

None of the above mentioned units are either constructed or suited as a tool for pellet counting and, at the same time, be used for appetite control of the feeding.

Some years ago in Norsk Fiskeoppdrett, Poro AB, Sweden introduced a pellet camera and a programme which counted pellets pointing downwards towards the bottom of the netpen. This did not function satisfactorily as the faeces (excrement) from the fish could not be distinguished from the feed pellets and therefore this measuring method was not greatly successful. In addition, there was no information that the pellet detection was carried out at the correct location in the netpen to thereby be able to rely upon the control of the feeding.

Akva Group has a Doppler sensor with a camera as a feed sensor for appetite feeding. This can also not count the fish in the feeding zone which is an important tool for the appetite feeding and will give an incorrect registration when the fish are found deep in the sea. In addition, it appears that the amount of pellets is influenced by the fish and faeces near the sensor. This was solved by encapsulating the sensor in a cage of net. The result was increased maintenance and cleaning.

Neither the Poro camera nor the Doppler can measure the average weight of the fish or count the fish in the measuring zone.

Known from NO20050517 is a method and device where a number of cameras are used, preferably CCD cameras, to register images of fish which move past the camera in a transfer channel. The signals from said camera are processed in a computer to calculate the volume of each fish. During registration, the fish is illuminated by at least two light sources and is registered by at least two cameras placed around the transfer channel, such that reflected light or silhouettes of the fish from opposite sides of the fish is registered, to form a complete photographic recording of the transverse dimension of the fish over the length of the fish. This is used as the basis to calculate the weight of the fish.

Furthermore, said transfer channel is necessary so that one fish shall be pumped or shall swim past and also that it is necessary to estimate the speed of the fish so that the area of average profiles of the fish can be calculated for determining the part volume of fish. These volume parts are later added to give a total volume of the fish.

GB 2 2001 772 A describes a method and device to determine the length measurements of the quality of farmed fish. The fish is forced to swim through a transparent channel or pipe where it is subjected to radiation from at least one radiation source. The radiation is registered by the photo detector in a number of cameras arranged in a row along the channel. The length of the fish can then be calculated in a computer according to the degree of masking in the photo detectors.

Known from GB 2 203 540 A is a method and apparatus for measuring, counting and classifying fish. The fish is forced along a curved track with detectors and associated transmitters. On its journey through the track the fish breaks the beam from a first light sensor and thereafter the beam from a second light sensor, and from the time between the break in the beams and the distance to the sensors one can determine the speed and the length of the fish. This is thereafter used to estimate the total size of the fish.

NO168151 describes a method and apparatus for counting fish. The fish is forced through a channel where a number of CCD line cameras are arranged, and with an associated light source on the opposite side. Fish which passes the light source form an area of shadow which the camera registers. Thereafter, the cross sectional area of the fish can be calculated, for example, in a computer, and built on the area registration the number of fish which has passed can be calculated by adding together all the registered areas and dividing the total area by the last calculated average area.

EP 0984391 A1 shows a counting device which, with the help of two simultaneously activated cameras, determines the number and size of fish which pass in a channel. The number of fish is counted with the help of size and direction which are estimated from images which are taken by the cameras.

EP-A-1 510 125 discloses a method and a system for registration of freely moving objects in a fish farm netpen comprising a submarine camera submerged into the netpen and suspended from a cable camera and a computer processing unit which analyses the shape and texture of the food particles and which analyses and discriminates the food particles.

In the present invention light sources and cameras or other irradiation sources assembled opposite each other in a transfer channel are not used. Correspondingly it is also unnecessary to force the fish individually through the channel. Common to all the cited documents is that the apparatus and the systems partly are large, expensive and not easy to handle. Furthermore it shall also be pointed out that the above mentioned documents only describe the technological background.

With the present invention the object is to solve the problems of biomass measuring and appetite control/feeding in one and the same device in the netpen in a simple, completely automated, maintenance friendly and efficient way.

The above mentioned object is achieved with a method for registration of predominately freely moving objects in a fish farm netpen as described in the independent claim 1, in that a camera housing with several underwater cameras are submerged in the netpen. Each camera takes individual images, at respective angles, of objects which freely pass the camera housing and sends said images to a computer processing unit. The computer processing unit analyses the images taken from different angles to determine the main pattern of the object, by grouping each pattern element from the relationship between shape, size, contrast and/or colour and by determining the mutual distance between given pattern elements for identification of a main pattern and, to determine, based on the main pattern, whether the objects are fish, pellets, faeces or other unknown elements.

Alternative embodiments of the method are characterised in that an object which has been defined as a fish based on approved placing of said main pattern is analysed with respect to be able to determine the volume of the object.

The analysis can determine the contour of the fish in each of the images from the cameras, based on the displacement of the contour in each of the images from the cameras, to estimate the distance along the contour of the fish whereupon a surface orientated in space with a known area is provided, and to look for pattern groups beyond said main pattern that can be identified and be positioned in all the images, and to estimate the distance to all identifiable pattern groups.

Furthermore the analysis can comprise the steps: to provide a surface in space with the shape of the fish independent of position or orientation, and based on positioning of dorsal fins, mouth, eye, ventral fins and tail, to estimate the volume on a vertical section of the fish which will be identical to the volume of half of the fish, and thereafter estimate the volume of the fish and thereby the weight.

The following steps can be carried out for the recognition of an object, after the computer processing unit has defined a fish and its position, the characteristic pattern on the fish is decided such as spots and variations in the fish scales and the mutual distance between these where these patterns are unique to each fish, and to apply the characteristic features to identify individual objects.

The analysis can be used to count the number of fish in the area of the netpen, in that the number of fish in the image area is counted, the mutual distance between the fish is estimated, and the swimming speed is estimated, whereupon the number of fish per volume is calculated.

By altering the vertical depth position of the camera a measure for the fish density through the water column is provided.

After the weight and the number of fish or fish density have been determined by the computer processing unit, the counting of pellets can be activated as a parameter for appetite control for the appetite of the fish and a signal can be sent to a control unit for the control of a feed distributor.

The main pattern can be used to determine the amount of pellets and faeces in an area of the netpen.

The above mentioned object is also achieved with a system as given in independent claim 10. The system is characterised in that a camera housing with several underwater cameras is submerged in the netpen, and at least three of said underwater cameras in the camera housing are all fixedly mounted in the form of a triangle, mainly pointing in the same direction where each camera is arranged to take individual images at respective angles of objects which freely pass the camera housing and to send said images to a computer processing unit, with the computer processing unit being arranged to analyse the images taken from different angles to determine the main pattern of the objects by grouping each pattern element based on the relationship between shape, size, contrast and/or colour, and by determining the mutual distance between given pattern elements for identification of a main pattern and to decide, based on the main pattern, whether the objects are fish, pellets, faeces or other unknown elements.

Alternative embodiments are characterised in that said underwater camera is orientated in a fixed frame or plate with an individual fixed distance, forming a rigid and fixed unit, and is arranged in a protruding and outer eccentric housing part in a ball formed housing.

The outer housing part can be arranged to an in-between lying housing part which in turn can be arranged to a stationary housing.

The housing can be connected to a ballast body via a stay.

Furthermore the housing can be equipped with an electronic compass so that position in relation to a given fixed point in the suspension system itself can be estimated with the help of the computer processing unit.

Reference is made to the enclosed figures which show an example of an embodiment of the invention, in which:

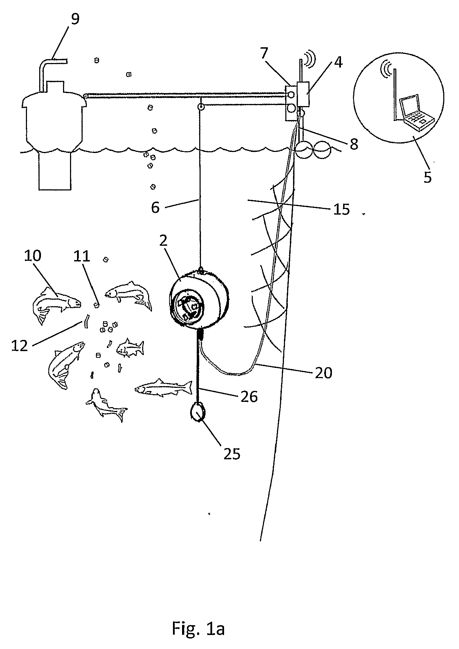

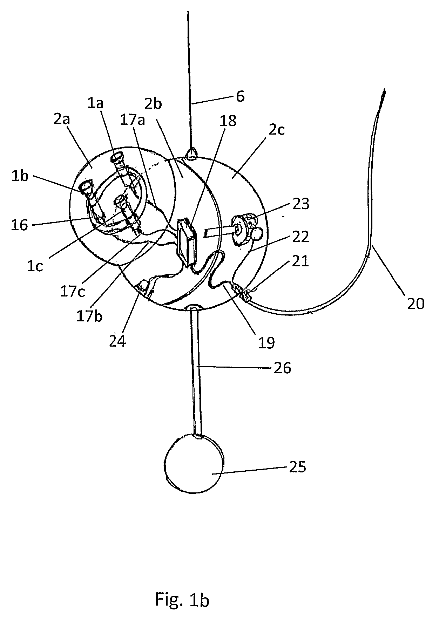

Figure 1 a shows a netpen with a device according to the invention,
Figure 1 b shows the device in more detail,
Figure 2 shows the positioning of the cameras in the device according to the invention,
Figures 3a and 3b show the positioning of the cameras in the device in relation to an object,
Figures 4a, 4b, 4c show images taken by the device according to the invention,
Figure 5a shows an object in a coordinate system, and
Figures 5b and 5c show converted images.

Fig.1a shows a netpen 15 in which is placed a closed unit 2, shown in detail in fig. 1 b, containing three underwater cameras 1 a, 1 b and 1c in a rigid frame 16 with mutual fixed distance and angle pointing in the same direction towards a feeding area 26 with fish 10. The frame 16 with the cameras 1 a, 1 b and 1 c form a triangle 1 which is preferably surrounded by one or more watertight and preferably ball-shaped housing 2, which in turn can be divided into a moveable, doubly-connected housing 2a, 2b and a stationary part 2c, where the housing part 2a is eccentrically orientated as a protruding eye in relation to the parts 2b, 2c. Thereby to be able to move the triangle quickly over a large area and at the same time limit fouling, collection of food residues and to be as gentle as possible towards the fish such that sores do not appear, is achieved. The triangle housing 2 is shown designed as a closed housing for the protection of the electronics.

From each of the cameras 1 a, 1 b and 1 c, a cable 17a, 17b and 17c, is attached, collected in a common cable 19 via a junction box 18 to which, according to the invention, other sensors 24 for temperature, oxygen, compass etc., can also be connected and which distribute signals and electricity transfer via a common cable 20, where this again also can contain signals and electricity supply to means for power transfer, for example, a gear motor 23 for rotation of the ball housing 2a, 2b.

The number of cables can, in this way, be minimised and it becomes a simpler installation with less maintenance. The cable 20 is led up to a control centre, processor or computer unit 8 via an underwater connection 21, and placed on a feeding automat/distributor 9 or netpen floating collar 10 which in turn has a wireless communication to a central PC 5. It shall be pointed out that the computer processing unit does not need to be arranged as shown in the figures, but can, for example, be the mentioned PC 5. The unit 8 will in this case also be a communication unit. The processing unit 8 or the feeding automat/distributor 9 is connected to transport pipes for the feeding and can, as shown in fig. 1 a, move the triangle housing 2 round in the netpen 15 lengthwise and depth wise, preferably via a suspension 6 with a winch 7. The positioning can take place automatically from the processor 8 for the best possible position in relation to the amount of fish, feed distribution, oxygen, current and wind.

In this way, the triangle housing 2 can be used for average weight measurements, counting the fish and counting feed pellets in one and same compact unit, in that images from the cameras 1 a, 1 b and 1 c in the frame send images, such as three dimensional images, to the processor 8 and/or the PC 5, and where the fish is not damaged, stressed or alarmed by physical geometrical barriers in the netpen, at the same time as there is not an unnecessary number of criss-crossing cables causing problems for operational safety and maintenance of the net case, such as, for example, cleaning of net bags 15 and sorting the fish, etc.

According to the invention one can imagine that the triangular ball housing 2 is programmed via the computer unit 8 to have a given position for the counting of the pellets and appetite control and another position covering the correct measurement area for average weight measurements or be positioned in relation to environmental conditions controlled by the processor or the computer unit 8 or the PC 5.

For stability and to compensate for large buoyancy caused by the volume of the triangular housing 2, a ballast body 25 is shown, for example, a ball connected to the lower part of the triangle housing 2c via a fixed stay 26.

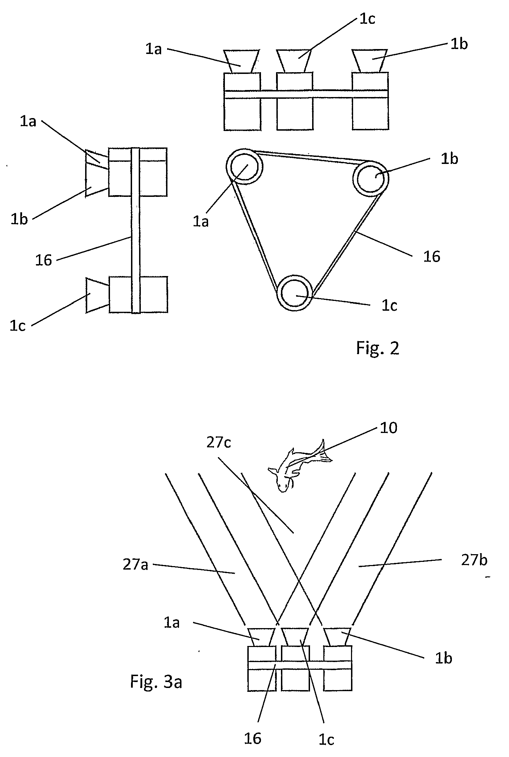

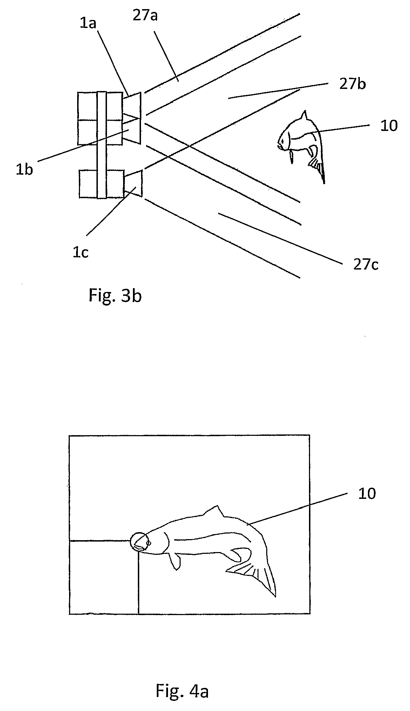

Fig. 2 shows the cameras 1 a, 1 b and 1 c orientated in relation to each other in the frame 16 and figs. 3a and 3b show the individual visual angles 27a, 27b and 27c of the three cameras covering one and the same fish 10 in arbitrary swimming position in relation to the fixed visual angles of the cameras seen from two sides.

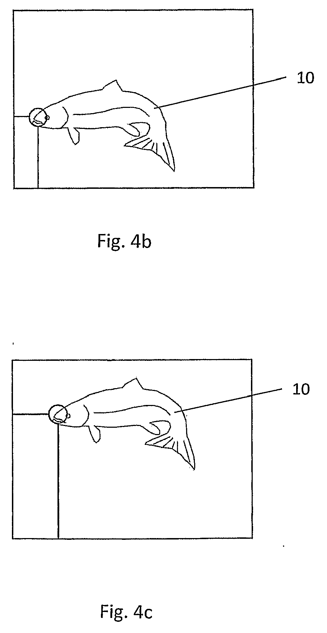

Figs. 4a, 4b and 4c show how the cameras 1 a, 1 b and 1 c individually show images of the coordinate position of the fish 10 on the screen so that the algorithm of the software can recognise the same fish 10 and identify the objects as fish 10, pellets 11 and faeces 12. As images are taken at the same time, the distance to, for example, the fish 10 is determined, and in addition the software can pick out the coordinates of the contour of, for example, the fish 10 in an arbitrary position swimming sidewise or up or down in relation to the cameras 1 a, 1 b and 1 c.

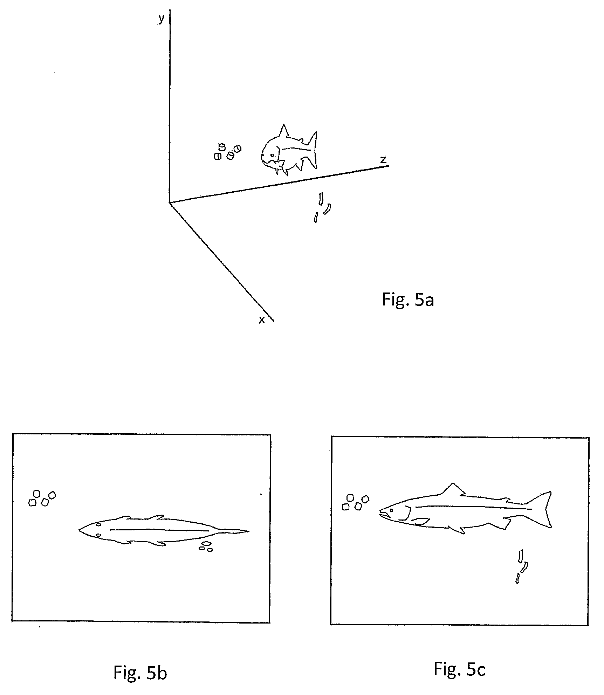

The figures 5a, 5b and 5c show how the arbitrary position in space of the objects 10, 11 and 12 can be converted for all images of fish 10, pellets 11 and faeces 12 to a two-dimensional coordinate system and from the estimated polar coordinates of a side outline and a breadth outline easily identify and estimate the weight of the fish 10, count the fish 10, and count feed pellets 11 by separation of faeces 12.

In that there are three different camera images that are taken at the same time, one will have a dynamic correlation such that the determination of the coordinates in space from each camera image will increase the accuracy of the measurements in that one will draw the outline in space from three positions which, with the help of the software, identify the polar coordinates of the outlines and the contour, and in this way one can interpolate the outer contours of the objects even if there is some overlapping in that, for example, one fish partially shades the measuring object itself or the fish 10 which is to be determined, pellets 11 which with the help of algorithms on the software shall be separated from the faeces 12, respectively, and thereafter be counted.

In this way one has attained a device which does not alarm the fish or damage the fish and which automatically can measure the average weight dynamically and with more images that form the basis for a more accurate and reliable average measurement of the fish.

In addition, pellets 11 can be separated out from the faeces 12 more easily such that the number of pellets measured in the feeding area can control the feed amounts from automated feed machines, feed buoys or feed distributers 9, and that one can, by counting the number of fish 10 in the area, be sure to have the fish in eating mode before one connects up an automated appetite control unit. This will in turn be an important premise for trusting an appetite control unit. In addition, one achieves in that images are taken from several cameras 1 and by taking a sufficient number of images, and also identification possibilities of, for example, the same pellet, in that this sinks down, to measure the angle deviation, distance and speed of sinking of this pellet 11, for in this way to measure local currents in the water. This can in turn be an advantage with respect to where in the netpen it is appropriate to feed at any given time.

In the following, the mode of action of the system is described. The system identifies all objects in front of the camera. Based on learning, the camera will be able to identify the position and orientation in space of any object in relation to the camera. By analysing two or more images and identifying the arbitrary positioning on a unique object in these images, the system will be able to estimate the speed and direction of the individual objects.

To identify objects and categorise these, every change in contrast and colour is analysed to form the basis for outline of the pattern. Each pattern element is grouped based on, for example, shape, size, contrast and colour. A mutual distance between given pattern elements gives identification of a main pattern, which is part of recognising the fish.

Recognition of the main pattern on a fish can be related to such features as:
- eye
- gill lid
- mouth
- dorsal fins
- ventral fins
- tail fin

Correspondingly, it will be possible to identify pellets, faeces and other unknown elements based on defined groupings of patterns.

An object which has been identified as a fish from approved position of the above mentioned main pattern is analysed with regard to being able to determine the volume of the object.

The analysis determines the contour of the fish in each of the images from the cameras. From the displacement of the contours in each of the images from the cameras, the distance along the contour of the fish is calculated. This gives a surface orientated in space with an area which is now known. The analysis continues by searching for pattern groups beyond the above mentioned main pattern that can be identified and be placed in all the images, and the distance to all identifiable pattern groups is estimated. After this analysis, the system will have a surface in space with the shape of the fish independent of position or orientation. Based on the positioning of, for example, dorsal fins, mouth, eye, ventral fins and tail, the system is capable of calculating the volume of a vertical section of the fish which will be identical to the volume of half the fish. As the fish is symmetrical about the vertical section, the volume of the fish is calculated and thus the weight (displaced water).

When one has identified a fish and its position, the system will find characteristic patterns on the fish, such as dots and variations in the fish scales and mutual distance between these. These patterns are unique to each fish and are used to identify individual fish. This ensures that the system will recognise if a fish is still in the image. This identity will prevent the average weight determinations being influenced by the same individual being average weight determined several times.

From deviations in the pattern systems that form the basis for determination of a fish, these give an indication of the quality of an individual object. One will then analyse within the contour of the fish and look for patterns of known deviations that can be identified as:
- Damages on fish caused by predators
- Damages from fungi
- Damages from bacteria
- Viral diseases
- Parasites, such as attacks by lice
- Crippled individuals

Based on the movement pattern and orientation of the fish, it is possible to be able to discover sick or injured fish without causing apparent damage. Reports about the health of the individual fish in the netpen are generated from the above mentioned analysis.

The system is capable of estimating the density of fish per volume in relation to the depth. The number of fish in the image area is counted. The mutual distance between the fish is estimated. The speed of swimming is estimated. This provides an estimation of the number of fish per volume. Changes in the position, vertical position (in the depth) of the camera will give a measure of the fish density through the water column.

From analysis of fish density, the system will be able to give an indication to feeding systems about the location of the fish in relation to the surface. Where the fish density increases in the uppermost part of the netpen before or during feeding there be will interest from the fish to get hold of some feed. When the fish density decreases in the uppermost layers of the netpen, the fish is satiated and the fish density will increase deeper in the netpen. Then the camera will also be able to count the increasing number of pellets in the netpen.

From analysis of several images where objects are identified as identical over two or more series of images, the speed of these objects can be estimated in relation to the camera, as the system estimates distance between each series of images and as the time between the image series is known, the speed and direction of the particles are estimated. For the particles that are identified as pellets, one can estimate the flow velocity along three axes, as the average sinking velocity for any type of pellet is known.

By identifying and following individual fish over several images, the system will estimate the swimming speed of individual fish. This gives an indication of the stress level of the fish based on the swimming speed of the fish.

## Claims

1. Method for registration of predominately freely moving objects in a fish farm netpen, in which a camera is being submerged and suspended from a cable (20) in the netpen, and said camera is connected to a computer processing unit (8), **characterised in that**
to submerge a camera housing (2) with several underwater cameras into the netpen,
each camera (1 a, 1 b, 1 c) takes individual images at respective angles of objects which freely pass the camera housing and sends said images to the computer processing unit (8), and that
the computer processing unit (8) analyses the images taken at different angles to determine a main pattern of the objects, by grouping each pattern element from the ratio between shape, size, contrast and/or colour, and by determining mutual distance between given pattern elements for identification of the main pattern, and
to determine, based on the main pattern, whether the objects are fish (10), pellets (11), faeces (12), or other unknown elements.

2. Method according to claim 1, **characterised in that** an object, which has been defined as a fish based on approved location of said main pattern, is analysed with regard to being able to determine the volume of the individual object.

3. Method according to claim 2, **characterised in that** the analysis determines the contour of the fish in each of the images from the cameras, by the following steps:
from the displacement of the contour in each of the images from the cameras, to estimate distance along the contour of the fish, whereupon a surface orientated in space with a known area is generated,
to search for pattern groups beyond said main pattern that can be identified and be positioned in all the images, and to estimate the distance to all identifiable pattern groups.

4. Method according to claim 3, **characterised in that** the analysis further comprises the steps:
to provide a surface in space with the shape of the fish, independent of position or orientation, and
from the position of dorsal fins, mouth, eye, ventral fins and tail, to estimate the volume of a vertical section of the fish that will be identical to the volume of half the fish, and thereafter estimate the volume of the fish and thereby its weight.

5. Method according to claim 2, **characterised by** the following steps for recognition of an individual object:
after the computer processing unit (8) has defined a fish and its position, the characteristic pattern on the fish is determined, such as dots and variation in the fish scales and mutual distance between these, where these patterns are unique to each fish, and
to apply the characteristic features to identify individual objects.

6. Method according to claim 5, **characterised in that** the analysis is used to count the number of fish in an area of the netpen, **in that** the number of fish in the image area is counted, the mutual distance between the fish is estimated, and the swimming speed is estimated, whereupon the number of fish per volume is calculated.

7. Method according to claim 6, **characterised in that** the vertical depth position of the camera is altered to provide a measure of the fish density through the water column.

8. Method according to claims 1-7, **characterised in that** after the weight, number of fish (10) or fish density have been estimated by the computer processing unit (8), counting of pellets (11) is activated as a parameter to the appetite control of the appetite of the fish, and to send a signal to a control unit to control a feed distributer (9).

9. Method according to claim 1, **characterised in that** the main pattern is used to determine the amount of pellets (11) and faeces (12) in an area of the netpen.

10. System for registration of predominately freely moving objects in a fish farm netpen, comprising a camera submerged and suspended from a cable (20) in the netpen, and said camera is connected to a computer processing unit (8), **characterised by** comprising:
a camera housing (2) with several underwater cameras submerged in the netpen,
at least three underwater cameras (1 a, 1 b, 1 c) in the camera housing (2) are mutually fixedly mounted in the form of a triangle, pointing, in the main, in the same visual direction, where each camera is arranged to take individual images at respective angles of objects that freely pass the camera housing and to send said images to the computer processing unit (8), wherein
the computer processing unit (8) is arranged to analyse the images taken from different angles to determine the main pattern of the objects, by grouping each pattern element from relations between shape, size, contrast and/or colour, and by determining the mutual distance between given pattern elements for identification of the main pattern and to determine, based on the main pattern, whether the objects are fish (10), pellets (11), faeces (12), or other unknown elements.

11. System according to claim 10, **characterised in that** said underwater cameras (1 a, 1 b, 1 c) are orientated in a fixed frame or plate (16) at an individual fixed distance, forming a rigid and fixed unit and are arranged in a protruding and outer, eccentric housing part (2a) in a ball-formed housing (2).

12. System according to claim 11, **characterised in that** the outer housing part (2a) is arranged to an in-between lying housing part (2b), which in turn is arranged to a stationary housing (2c).

13. System according to claim 10, **characterised in that** the housing (2) is connected to a ballast body (25), via a stay (26).

14. System according to claim 10, **characterised in that** the housing (2) is equipped with an electronic compass (24), such that the position with regard to a given fixed point in the suspension system (6, 7) itself can be estimated with the help of the computer processing unit (8).

## Patentansprüche

1. Verfahren zur Erfassung von sich überwiegend frei bewegenden Objekten in einem Netzgehege einer Fischfarm, worin eine Kamera im Netzgehege eingetaucht und an einem Kabel (20) aufgehängt ist und die Kamera mit einer Computerverarbeitungseinheit (8) verbunden ist,
**dadurch gekennzeichnet, dass**
ein Kameragehäuse (2) mit mehreren Unterwasserkameras in das Netzgehege eingetaucht ist,
jede Kamera (1a, 1b, 1c) einzelne Bilder unter jeweiligen Winkeln von Objekten aufnimmt, welche das Kameragehäuse frei passieren, und die Bilder an die Computerverarbeitungseinheit (8) sendet, und dass
die Computerverarbeitungseinheit (8) die unter verschiedenen Winkeln aufgenommenen Bilder analysiert, um ein Hauptmuster der Objekte zu bestimmen, indem jedes Musterelement nach dem Verhältnis zwischen Form, Größe, Kontrast und/oder Farbe gruppiert wird und indem eine gegenseitige Distanz zwischen gegebenen Musterelementen für eine Identifizierung des Hauptmusters bestimmt wird, und
um basierend auf dem Hauptmuster zu bestimmen, ob die Objekte Fische (10), Pellets (11), Kot (12) oder andere unbekannte Elemente sind.

2. Verfahren nach Anspruch 1,
**dadurch gekennzeichnet, dass**
ein Objekt, welches auf der Basis einer zugelassenen Lage des Hauptmusters als ein Fisch definiert wurde, im Hinblick darauf analysiert wird, das Volumen des einzelnen Objekts bestimmen zu können.

3. Verfahren nach Anspruch 2,
**dadurch gekennzeichnet, dass**
die Analyse die Kontur des Fisches in jedem der Bilder von den Kameras durch die folgenden Schritte bestimmt:
aus der Verschiebung der Kontur in jedem der Bilder von den Kameras eine Distanz entlang der Kontur des Fisches zu schätzen, woraufhin eine im Raum orientierte Oberfläche mit einer bekannten Fläche erzeugt wird,
nach Mustergruppen über das Hauptmuster hinaus zu suchen, die in all den Bildern identifiziert und positioniert werden können, und die Distanz zu allen identifizierbaren Mustergruppen zu schätzen.

4. Verfahren nach Anspruch 3,
**dadurch gekennzeichnet, dass**
die Analyse ferner die Schritte umfasst:
eine Oberfläche im Raum mit der Form des Fisches unabhängig von Position oder Orientierung zu liefern, und
aus der Position von Rückenflossen, Maul, Auge, Bauchflossen und Schwanz das Volumen eines vertikalen Schnitts des Fisches zu schätzen, das dem Volumen des halben Fisches identisch sein wird, und danach das Volumen des Fisches und dadurch dessen Gewicht zu schätzen.

5. Verfahren nach Anspruch 2,
**gekennzeichnet durch** die folgenden Schritte für eine Erkennung eines einzelnen Objekts:
nachdem die Computerverarbeitungseinheit (8) einen Fisch und dessen Position definiert hat, das charakteristische Muster auf dem Fisch wie etwa Punkte und eine Variation in den Fischabmessungen und eine gegenseitige Distanz zwischen diesen zu bestimmen, wo diese Muster für jeden Fisch einzigartig sind, und
die charakteristischen Merkmale anzuwenden, um einzelne Objekte zu identifizieren.

6. Verfahren nach Anspruch 5,
**dadurch gekennzeichnet, dass**
die Analyse verwendet wird, um die Fischzahl in einem Bereich des Netzgeheges zu zählen, dadurch, dass die Fischzahl im Bildbereich gezählt wird, die gegenseitige Distanz zwischen den Fischen geschätzt wird und die Schwimmgeschwindigkeit geschätzt wird, woraufhin die Fischzahl pro Volumen berechnet wird.

7. Verfahren nach Anspruch 6,
**dadurch gekennzeichnet, dass**
die vertikale Tiefenposition der Kamera geändert wird, um ein Maß der Fischdichte über die Wassersäule zu liefern.

8. Verfahren nach Ansprüchen 1 - 7,
**dadurch gekennzeichnet, dass**
nachdem das Gewicht, die Anzahl Fische (10) oder Fischdichte durch die Computerverarbeitungseinheit (8) geschätzt worden sind, eine Zählung von Pellets (11) aktiviert wird als ein Parameter zur Appetitkontrolle des Appetits der Fische und ein Signal an eine Steuerungseinheit gesendet wird, um einen Futterverteiler (9) zu steuern.

9. Verfahren nach Anspruch 1,
**dadurch gekennzeichnet, dass**
das Hauptmuster verwendet wird, um die Menge an Pellets (11) und Kot (12) in einem Bereich des Netzgeheges zu bestimmen.

10. System zur Erfassung von sich überwiegend frei bewegenden Objekten in einem Netzgehege einer Fischfarm, mit einer Kamera, die im Netzgehege eingetaucht und an einem Kabel (20) aufgehängt ist und wobei die Kamera mit einer Computerverarbeitungseinheit (8) verbunden ist,
**gekennzeichnet durch**
ein Kameragehäuse (2) mit mehreren Unterwasserkameras, das in das Netzgehege eingetaucht ist,
zumindest drei Unterwasserkameras (1a, 1b, 1c) im Kameragehäuse (2), die in Form eines Dreiecks wechselseitig fest montiert sind, wobei sie hauptsächlich in die gleiche Blickrichtung weisen, wo jede Kamera angeordnet ist, um einzelne Bilder unter jeweiligen Winkeln von Objekten aufzunehmen, die das Kameragehäuse frei passieren, und die Bilder an die Computerverarbeitungseinheit (8) zu senden, wobei
die Computerverarbeitungseinheit (8) angeordnet ist, um die aus verschiedenen Winkeln aufgenommenen Bilder zu analysieren, um das Hauptmuster der Objekte zu bestimmen, indem jedes Musterelement nach Relationen zwischen Form, Größe, Kontrast und/oder Farbe gruppiert wird und indem die gegenseitige Distanz zwischen gegebenen Musterelementen für eine Identifizierung des Hauptmusters bestimmt wird, und um basierend auf dem Hauptmuster zu bestimmen, ob die Objekte Fische (10), Pellets (11), Kot (12) oder andere unbekannte Elemente sind.

11. System nach Anspruch 10,
**dadurch gekennzeichnet, dass**
die Unterwasserkameras (1a, 1b, 1c) in einem festen Rahmen oder einer Platte (16) bei einer individuellen festen Distanz orientiert sind, wobei sie eine starre und feste Einheit bilden, und in einem vorstehenden und äußeren exzentrischen Gehäuseteil (2a) in einem kugelförmigen Gehäuse (2) angeordnet sind.

12. System nach Anspruch 11,
**dadurch gekennzeichnet, dass**
der äußere Gehäuseteil (2a) an einem dazwischenliegenden Gehäuseteil (2b) angeordnet ist, der wiederum an einem stationären Gehäuse (2c) angeordnet ist.

13. System nach Anspruch 10,
**dadurch gekennzeichnet, dass**
das Gehäuse (2) über eine Strebe (26) mit einem Ballastkörper (25) verbunden ist.

14. System nach Anspruch 10,
**dadurch gekennzeichnet, dass**
das Gehäuse (2) mit einem elektronischen Kompass (24) ausgestattet ist, so dass die Position: bezüglich eines gegebenen festen Punktes im Aufhängungssystem (6, 7) selbst mit Hilfe der Computerverarbeitungseinheit (8) geschätzt werden kann.

## Revendications

1. Procédé d'enregistrement d'objets qui se déplacent de manière principalement libre dans un enclos à filets d'une ferme piscicole, dans lequel une caméra est immergée et suspendue à un câble (20) dans l'enclos, et ladite caméra est reliée à une unité de traitement informatique (8), **caractérisé en ce que**
pour immerger un caisson de caméra (2) avec plusieurs caméras sous-marines dans l'enclos, chaque caméra (1a, 1b, 1c) prend des images individuelles à des angles respectifs des objets qui traversent librement le caisson de caméra et envoie lesdites images à l'unité de traitement informatique (8), et **en ce que**
l'unité de traitement informatique (8) analyse les images prises à différents angles afin de déterminer un motif principal des objets, en regroupant chaque élément de motif à partir du rapport entre la forme, la taille, le contraste et/ou la couleur, et en déterminant la distance mutuelle entre des éléments de motif donnés afin d'identifier le motif principal, et
pour déterminer, sur la base du motif principal, si les objets sont des poissons (10), des granules (11), des excréments (12), ou d'autres éléments inconnus.

2. Procédé selon la revendication 1, **caractérisé en ce qu'**un objet, qui a été défini comme un poisson sur la base d'un emplacement approuvé dudit motif principal, est analysé quant au fait qu'il soit possible ou non de déterminer le volume de l'objet individuel.

3. Procédé selon la revendication 2, **caractérisé en ce que** l'analyse détermine le contour du poisson sur chacune des images provenant des caméras, à l'aide des étapes suivantes qui consistent :
à partir du déplacement du contour sur chacune des images provenant des caméras, à estimer la distance le long du contour du poisson, après quoi une surface orientée dans l'espace et qui possède une superficie connue est générée,
à rechercher des groupes de motifs au-delà dudit motif principal qui peuvent être identifiés et positionnés sur l'ensemble des images, et à estimer la distance par rapport à l'ensemble des groupes de motifs identifiables.

4. Procédé selon la revendication 3, **caractérisé en ce que** l'analyse comprend en outre les étapes qui consistent à :
fournir une surface dans un espace, avec la forme d'un poisson, indépendamment de la position ou de l'orientation, et
à partir de la position des nageoires dorsales, de la bouche, des yeux, des nageoires ventrales et de la queue, estimer le volume d'une section verticale du poisson qui sera identique au volume de la moitié du poisson, puis estimer le volume du poisson et, ainsi, son poids.

5. Procédé selon la revendication 2, **caractérisé par** les étapes suivantes de reconnaissance d'un objet individuel :
après que l'unité de traitement informatique (8) a défini un poisson et sa position, le motif caractéristique présent sur le poisson est déterminé, comme les points et la variation des écailles du poisson, et la distance mutuelle entre ceux-ci, ces motifs étant propres à chaque poisson, et
l'application des caractéristiques afin d'identifier des objets individuels.

6. Procédé selon la revendication 5, **caractérisé en ce que** l'analyse est utilisée pour compter le nombre de poissons dans une zone de l'enclos, et **en ce que** le nombre de poissons sur l'image est compté, la distance mutuelle entre les poissons est estimée, et la vitesse de nage est estimée, après quoi le nombre de poissons par volume est calculé.

7. Procédé selon la revendication 6, **caractérisé en ce que** la position de profondeur verticale de la caméra est modifiée afin de fournir une mesure de la densité des poissons dans la colonne d'eau.

8. Procédé selon les revendications 1 à 7, **caractérisé en ce que**, après que le poids, le nombre de poissons (10) ou la densité des poissons a été estimé(e) par l'unité de traitement informatique (8), le comptage des granules (11) est activé comme paramètre de contrôle de l'appétit des poissons, et un signal est envoyé à une unité de commande afin de contrôler un distributeur de nourriture (9).

9. Procédé selon la revendication 1, **caractérisé en ce que** le motif principal est utilisé pour déterminer la quantité de granules (11) et d'excréments (12) dans une zone de l'enclos.

10. Système d'enregistrement d'objets qui se déplacent de manière principalement libre dans un enclos à filets d'une ferme piscicole, qui comprend une caméra immergée et suspendue à un câble (20) dans l'enclos, ladite caméra étant reliée à une unité de traitement informatique (8), **caractérisé en ce qu'**il comprend .
un caisson de caméra (2) avec plusieurs caméras sous-marines immergé dans l'enclos,
au moins trois caméras sous-marines (1a, 1b, 1c) dans le caisson de caméra (2) sont montées de manière fixe en forme de triangle qui pointe dans la même direction visuelle, chaque caméra étant prévue pour prendre des images individuelles à des angles respectifs des objets qui traversent librement le caisson de caméra et pour envoyer lesdites images à l'unité de traitement informatique (8), dans lequel
l'unité de traitement informatique (8) est prévue pour analyser les images prises à différents angles afin de déterminer un motif principal des objets, en regroupant chaque élément de motif à partir des rapports entre la forme, la taille, le contraste et/ou la couleur, et en déterminant la distance mutuelle entre des éléments de motif donnés afin d'identifier le motif principal, et pour déterminer, sur la base du motif principal, si les objets sont des poissons (10), des granules (11), des excréments (12), ou d'autres éléments inconnus.

11. Système selon la revendication 10, **caractérisé en ce que** lesdites caméras sous-marines (1a, 1b, 1c) sont orientées sur un châssis ou une plaque fixe (16) à une distance individuelle fixe, en formant une unité rigide et fixe, et sont disposées dans une partie de caisson extérieure, excentrique en saillie (2a) dans un caisson en forme de boule (2).

12. Système selon la revendication 11, **caractérisé en ce que** la partie de caisson extérieure (2a) est prévue sur une partie de caisson intermédiaire (2b), qui est à son tour placée sur un caisson stationnaire (2c).

13. Système selon la revendication 10, **caractérisé en ce que** le caisson (2) est relié à un corps de ballast (25), par le biais d'un étai (26).

14. Système selon la revendication 10, **caractérisé en ce que** le caisson (2) est équipé d'un compas électronique (24), de sorte que la position par rapport à un point fixe donné dans le système de suspension (6, 7) lui-même puisse être estimée à l'aide de l'unité de traitement informatique (8).
